# EUROPÄISCHE PATENTSCHRIFT

(11) **EP 1 060 857 B1**
(45) Veröffentlichungstag und Bekanntmachung des Hinweises auf die Patenterteilung: **11.09.2002**
(21) Anmeldenummer: 00890175.3
(22) Anmeldetag: 31.05.2000
(51) Int. Cl.: B29B 9/06, B26D 7/26

(54) **Halterung für Messer von Granuliervorrichtungen**
Knife holder for granulating apparatus
Support de lames pour appareils de granulation

(30) Priorität: 16.06.1999 AT 106699
(43) Veröffentlichungstag der Anmeldung: 20.12.2000
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dr. Dipl.-Ing.

(56) Entgegenhaltungen:
- EP-A- 0 164 099
- EP-A- 0 545 251
- EP-A- 0 736 362
- DE-A- 3 126 550
- US-A- 2 370 952
- US-A- 4 021 176
- US-A- 5 017 119
- PATENT ABSTRACTS OF JAPAN vol. 018, no. 396 (M-1644), 25. Juli 1994 (1994-07-25) & JP 06 114793 A (SUZUKI MOTOR CORP), 26. April 1994 (1994-04-26)
- PATENT ABSTRACTS OF JAPAN vol. 018, no. 666 (M-1724), 15. Dezember 1994 (1994-12-15) & JP 06 262593 A (SEKISUI CHEM CO LTD), 20. September 1994 (1994-09-20)

## Beschreibung

Die Erfindung bezieht sich auf eine Halterung für Messer von Granuliervorrichtungen, insbesondere zum Heißabschlagen aus Düsen ausgepresster Stränge aus thermoplastischem Kunststoff, wobei das Messer begrenzt beweglich in einer Aufnahme der Halterung sitzt, die als Gleitführung für das Messer ausgebildet ist, die das Messer in seiner Längsrichtung führt.

Bei bekannten Halterungen für solche Messer hat das Messer an seinem der Schneide abgewendeten Ende einen axialen Zapfen, welcher in einer als Drehlager ausgebildeten Aufnahme sitzt. Bei einer anderen bekannten Konstruktion ist statt eines solchen zylindrischen Zapfens ein konischer Zapfen vorgesehen. Beide bekannte Ausbildungen haben den Nachteil, dass die beim Umlauf des Messers hervorgerufene Fliehkraft am Zapfen ein erhöhtes Reibungsmoment hervorruft, welches größer sein kann als die Einstellkraft auf das Messer, welche von der über die Stirnfläche der Düsen gleitenden Schneide des Messers ausgeübt wird. Es entsteht dadurch gleichsam eine Verkantung des Messers, welche verhindert, dass sich das Messer automatisch selbst justiert, insbesondere dann, wenn die Messerschneide kurz, das Messer also schmal ist, was aus Gründen der Massenreduzierung und auch aus Gründen der Verwendung von handelsüblichen Standardmessern gewünscht ist. Weiters ist beiden bekannten Ausbildungen der Nachteil eigen, dass der Messerwechsel erhebliche Zeit und Werkzeug erforderlich macht. Die zweitgenannte bekannte Konstruktion hat darüber hinaus den Nachteil, dass bei jedem Messerwechsel eine neue Justierung erforderlich ist.

Aus DE 23 45 310 A ist eine Messerhalterung der eingangs geschilderten Art bekannt, bei welcher aber das in die Gleitführung eingeschobene Messer nach Einstellung seiner Lage in der Gleitführung mittels eines Spannstückes festgespannt wird. Damit ist eine selbstjustierende Messereinstellung nicht möglich.

Die Erfindung setzt sich zur Aufgabe, diese Nachteile zu vermeiden und eine Halterung der eingangs geschilderten Art so zu verbessern, dass sich eine selbstjustierende Messereinstellung ohne große Massen und bei geringem konstruktivem Aufwand ergibt. Die Erfindung löst diese Aufgabe dadurch, dass das Messer in der Gleitführung mit Spiel sitzt, sodass sich das Messer begrenzt um seine Längsachse in der Gleitführung verschwenken kann und dass das Messer an drei Abstützstellen an seiner Halterung abgestützt ist, von denen die erste an der Deckfläche des Messers liegt, die zweite an der Bodenfläche des Messers, wobei diese beiden Abstützstellen, gesehen in Richtung der Längsachse des Messers, voneinander in Abstand in dieser Längsachse angeordnet sind und die erste Abstützstelle näher zur Schneide des Messers liegt als die zweite Abstützstelle, wogegen die dritte Abstützstelle an dem der Schneide abgewendeten Hinterende des Messers liegt. Die zuletzt genannte, dritte Abstützstelle nimmt die Schneidkraft auf, die beiden anderen Abstützstellen, welche an einander entgegengesetzten Flächen des Messers mittig in seiner Achse liegen, erlauben es, dass sich das Messer geringfügig um seine Längsachse in der Gleitführung verschwenken kann, sodass stets eine sichere Anlage der gesamten Schneidkante an der Lochplatte gesichert ist. Dadurch wird eine selbstjustierende Messereinstellung geschaffen und dies ohne große Massen und mit einfachem konstruktivem Aufwand. Die Vermeidung großer Massen bringt den Vorteil, dass trotz der hohen auftretenden Zentrifugalkräfte (die Messerwelle kann ja mit bis 6000 U/min umlaufen) nur eine geringe Andrückkraft der Schneidkante des Messers an die Stirnfläche der Lochplatte und dadurch nur geringe Selbsteinstellkräfte erforderlich sind. Die durch diese geringere Andrückkraft und Selbsteinstellkräfte des Messers hervorgerufene stetige Anlage der gesamten Schneidkante an der Lochplatte erzielt eine geringere und darüber hinaus eine gleichmäßige Abnützung der Schneidkante und damit auch der Stirnfläche der Lochplatte. Vorteilhaft ist hiebei, dass die geringen erforderlichen Selbsteinstellkräfte es ermöglichen, das Messer schmal, also die Schneidkante kurz zu halten, was aus Gründen der Massenreduzierung erwünscht ist und die Verwendung schmaler handelsüblicher Standardmesser ermöglicht. Weiters ist vorteilhaft, dass ein Messerwechsel in kürzester Zeit möglich ist, sogar ohne Werkzeuge, da das Spiel zwischen Gleitführung und Messer es ermöglicht, das Messer ohne Schwierigkeiten bei der Montage bzw. beim Messerwechsel einzusetzen bzw. aus dieser Gleitführung herauszuziehen. Um hiebei zu verhindern, dass das Messer bei der Montage aus der Gleitführung herausfällt, ist gemäß einer bevorzugten Ausführungsform der Erfindung das Messer in der Gleitführung durch ein federndes Druckstück oder durch einen Magnet gehalten. Gemäß einer Weiterbildung der Erfindung kann hiebei das federnde Druckstück in eine Rast des Messers eingreifen, was den Vorteil bringt, dass für diese Rast das Loch herangezogen werden kann, welches bei herkömmlichen handelsüblichen Messern im Hinterbereich des Messers angeordnet ist und bei bekannten Konstruktionen dazu dient, das Messer in seiner Halterung durch eine durch das Loch hindurchgesteckte Schraube festzuhalten.

Für die Ausbildung der dritten Abstützstelle am Hinterende des Messers ist es gemäß einer bevorzugten Ausführungsform der Erfindung zweckmäßig, diese dritte Abstützstelle von einem an der Hinterkante des Messers anliegenden Vorsprung der Halterung zu bilden. Ein solcher Vorsprung lässt sich problemlos ausbilden, gegebenenfalls an der Halterung anformen und erspart einen am Hinterende des Messers angeordneten Vorsprung, welcher mit der dritten Abstützstelle zusammenwirkt.

Die Verschwenkung des Messers um seine Längsachse in der Gleitführung wird erleichtert und begünstigt, wenn zumindest die erste und die zweite Abstützstelle punktförmig ausgebildet sind, vorzugsweise in Form der Spitzen von Bolzen oder Gewindezapfen. Hiebei ist es zweckmäßig, die erste und zweite Abstützstelle von in Gewindebohrungen der Halterung sitzenden Stellschrauben zu bilden, da auf diese Weise eine Justierung jederzeit und in einfacher Weise möglich ist.

Um das Messer stets an die die Düsen aufweisende Lochplatte anzupressen, ist im Rahmen der Erfindung die Gleitführung an einem Schwenkzapfen befestigt, der im Sinne einer Anpressung der Schneide des Messers belastet ist, vorzugsweise durch eine Feder. Solche Messeranpressungen sind an sich bekannt, haben aber bei der erfindungsgemäßen Konstruktion den Vorteil, dass die Andrückkraft geringer gehalten werden kann und dass die erwähnte Selbsteinstellung des Messers die Anpressung der Messerschneide gleichmäßig hält.

Im Rahmen der Erfindung ist es zweckmäßig, die Gleitführung mit geglätteten, z.B. polierten und gehärteten Gleitflächen auszubilden, um die Reibungskräfte herabzusetzen und Abnützungen nach Möglichkeit zu vermeiden. Es kann hiebei die Gleitführung selbst aus gehärtetem Material bestehen oder mit einer harten Beschichtung versehen sein.

Aus Fertigungsgründen ist es ferner günstig, wenn erfindungsgemäß die Gleitführung aus zwei miteinander verbundenen Bauteilen besteht, von denen der eine die erste Abstützstelle aufweist und das Messer an dessen Deckfläche und an den beiden Seitenrändern führt, wogegen der andere Bauteil die zweite Abstützstelle aufweist und das Messer an dessen Bodenfläche führt.

In der Zeichnung ist der Erfindungsgegenstand anhand eines Ausführungsbeispieles schematisch veranschaulicht.

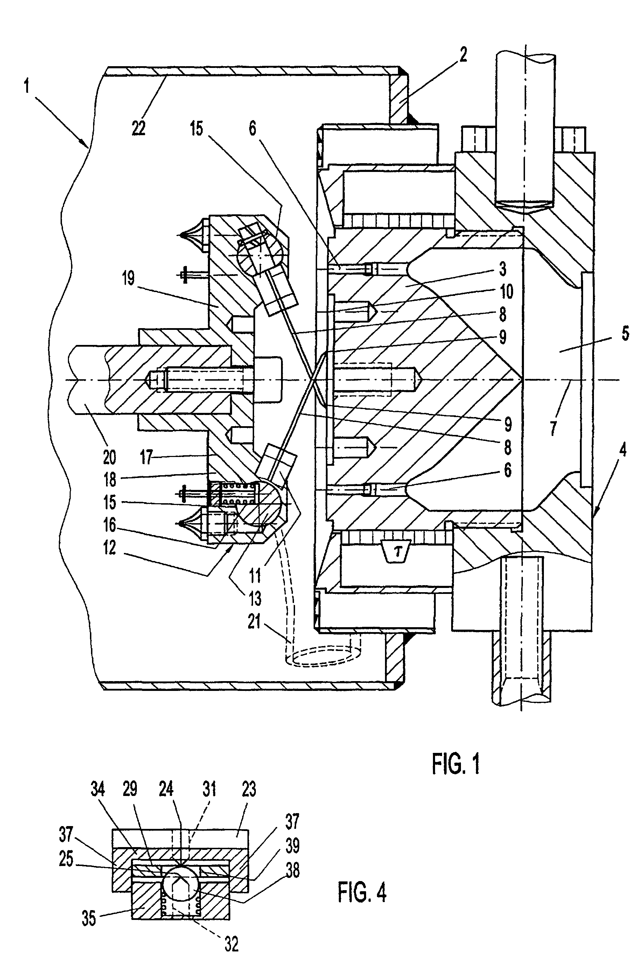

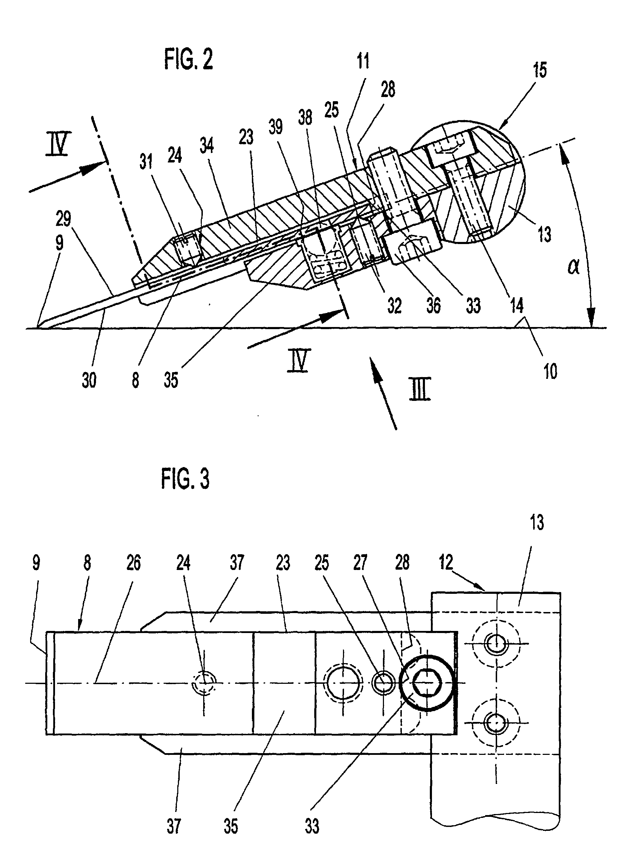

Fig. 1 zeigt einen Axialschnitt durch einen Granulierkopf für das Heißabschlagen thermoplastischer Kunststoffstränge. Fig. 2 zeigt die Halterung für das Messer im Schnitt. Fig. 3 ist eine Ansicht in Richtung des Pfeiles III der Fig. 2. Fig. 4 ist ein Schnitt nach der Linie IV-IV der Fig. 2.

Eine Granuliereinrichtung nach Fig. 1 hat ein zylindrisches Gehäuse 1, an dessen eines Stirnende 2 eine Lochplatte 3 angeschlossen ist. Die Lochplatte 3 bildet die Austrittsöffnung eines Extruders 4 od.dgl., welcher das zu verarbeitende thermoplastische Kunststoffmaterial über einen Zustromkanal 5 zur Lochplatte 3 unter Druck zuführt. In der Lochplatte 3 sind mehrere Düsen 6 im Kreis um die zentrale Achse 7 verteilt angeordnet, durch welche Düsen 6 das plastifizierte Material ausgedrückt wird. An der Austrittsseite der Düsen 6 werden die Stränge des thermoplastischen Kunststoffmateriales in einzelne Teilchen heiß abgeschlagen. Hiezu sind Messer 8 vorgesehen, welche um die Achse 7 umlaufen und mit ihren Schneidkanten 9 an der austrittsseitigen Stirnfläche 10 der Lochplatte 3 anliegen, an welcher Stirnfläche 10 die Düsen 6 münden. Der Umlauf der Messer wird durch eine Welle 20 hervorgerufen, welche um die zentrale Achse 7 verdrehbar gelagert und durch einen nicht dargestellten Antrieb zum Umlauf um die Achse 7 angetrieben ist. Dieser Umlauf kann sehr rasch erfolgen, mit Tourenzahlen bis 6000 U/min. An der Welle 20 ist eine Platte 19 angeschraubt, welche eine Halterung 12 für jedes Messer trägt oder bildet. Hiebei sitzt jedes Messer in einer Aufnahme 11, welche einen Bestandteil der Halterung 12 bildet. Hiebei ist diese Aufnahme an einem Schwenkzapfen 13 befestigt, insbesondere mittels Schrauben 14 angeschraubt (Fig. 2). Der Schwenkzapfen 13 sitzt um seine Achse schwenkbar in einer Bohrung 15 der Halterung 12. Jeder Schwenkzapfen 13 hat eine Ausnehmung 16, an welcher eine Feder 17 anliegt, die gegen ein Widerlager 18 abgestützt ist. Die Anordnung ist so getroffen, dass die Feder 17 die Schneidkante 9 des Messers an die Stirnfläche 10 der Lochplatte 3 andrückt. Zweckmäßig ist das Widerlager 18 verstellbar, z.B. als Schraubmutter, um die Anpresskraft der Feder 17 einstellen zu können. Die Messer 8 schlagen aus den durch die Düsen 6 austretenden Kunststoffsträngen Teilchen ab. Diese heißen Teilchen werden durch Kühlwasser gekühlt, das über eine Leitung 21 so in das Gehäuse 1 eingeleitet wird, dass die heißen Kunststoffteilchen rasch aus dem Düsenbereich abgeführt und gekühlt werden. Zweckmäßig führt das zugeführte Kühlwasser die Kunststoffteilchen in Form einer spiralförmigen an am Mantel 22 des Gehäuses 1 entlang zu einer nicht dargestellten Auslassöffnung, durch welche die Granulatkörnchen zusammen mit dem Kühlwasser austreten.

In den Fig. 2 bis 4 ist die Halterung 12 genauer dargestellt. Die Aufnahme 11 bildet eine Gleitführung 23, in welcher das Messer 8 mit Spiel derart geführt ist, dass es sich um seine Längsachse begrenzt verschwenken kann. Um dies zu ermöglichen, ist das Messer 8 an zwei Abstützstellen 24, 25 punktförmig in seiner Längsachse 26 abgestützt. Eine dritte Abstützstelle 27 liegt am Hinterende des Messers 8 und nimmt den Schneiddruck auf. Die erste Abstützstelle 24 liegt an der Deckfläche 29 des Messers 8, wogegen die zweite Abstützstelle 25 an der Bodenfläche 30 des Messers 8 liegt. Beide Abstützstellen 24, 25 sind von Stellschrauben 31, 32 gebildet, die in entsprechende Gewindebohrungen der Aufnahme 11 eingeschraubt sind und an ihren dem Messer 8 zugewendeten Enden in Spitzen auslaufen, um eine möglichst punktförmige Abstützung des Messers 8 in seiner Achse 26 zu erzielen. Die erste Abstützstelle 24 liegt näher zur Schneidkante 9 des Messers 8 als die zweite Abstützstelle 25. Diese Versetzung ist erforderlich, weil einerseits die Schneidkante 9 und anderseits der Schwenkzapfen 13 ein Drehmoment auf das Messer 8 ausüben.

Die dritte Abstützstelle 27 liegt im Bereich des Hinterendes des Messers 8. Bei der in den Fig. 2-4 dargestellten Ausführungsform ist diese dritte Abstützstelle 27 an der Hinterkante 28 des Messers 8 vorgesehen, was es entbehrlich macht, einen als Anschlag wirkenden gesonderten Vorsprung an dem Messer 8 vorzusehen. Zweckmäßig ist diese dritte Abstützstelle 27 von einem abgerundeten Vorsprung 33 der Halterung 12 gebildet, welcher Vorsprung 33 mittig, also in der Längsachse 26 des Messers 8 an dessen Hinterkante 28 anliegt.

Die von der Halterung 12 gebildete Gleitführung 23 ist zweckmäßig zweitteilig ausgebildet, wobei die beiden Bauteile 34, 35 miteinander durch eine Schraube 36 verbunden sind. Der eine die Gleitführung 23 bildende Bauteil 34 trägt die erste Abstützstelle 24 und deckt den Großteil der Deckfläche 29 des Messers 8 ab und führt das Messer auch mittels nach unten gerichteten Abwinkelungen 37 (Fig. 4) an den beiden Seitenrändern des Messers 8. Der andere Bauteil 35 der Gleitführung 23 ist kürzer als der erstgenannte Bauteil 34, führt das Messer 8 an dessen Bodenfläche 30, trägt die zweite Abstützstelle 25 und ist in den Abwinkelungen 37 seitengeführt. Die beiden Abwinkelungen 37 umgeben die beiden Seitenränder des Messers 8 mit geringem Spiel, derart, dass das Messer 8 sich um seine Längsachse 26 begrenzt verschwenken kann. Die Begrenzung dieser Verschwenkungsmöglichkeit ergibt sich dadurch, dass der Seitenrandbereich des Messers 8 zur Anlage an den oberen Gleitführungsbauteil 34 gelangt und/oder an den unteren Gleitführungsbauteil 35. Die beiden Abwinkelungen 37 sichern hiebei, dass das Messer 8 nicht seitlich aus der Gleitführung 23 freikommen kann. Ein Gesamt-Verschwenkungsbereich von etwa 4° hat sich als ausreichend erwiesen.

Wie die Fig. 1 und 2 zeigen, ist die Ebene des Messers 8 in Bezug auf die Ebene der Stirnfläche 10 der Lochplatte 3 unter einem Winkel α (Fig. 2) geneigt, welcher Winkel zweckmäßig etwa 20° beträgt.

Um die Reibungskräfte gering zu halten, ist es zweckmäßig, wenn die Gleitführung 23 an ihren dem Messer 8 zugewendeten Flächen gehärtet ist. Dies kann durch eine Beschichtung geschehen oder durch Verwendung geeigneter Stahlsorten für die Gleitführungsbauteile 34, 35.

Bei der Montage braucht nur das Messer 8 in die Gleitführung 23 eingeschoben zu werden. Um zu vermeiden, dass danach das Messer 8 wieder aus der Gleitführung 23 herausfällt, ist im unteren Gleitführungsbauteil 35 ein federndes Druckstück 38 vorgesehen, zweckmäßig in Form einer durch eine Feder belasteten Kugel, welches Druckstück 38 die Schwenkfreiheit des Messers 8 nicht behindert. Dieses Druckstück 38 schnappt bei der Einschiebung des Messers 8 in die Gleitführung 23 in eine Rast 39 des Messers 8 ein und sichert so das Messer 8 gegen Herausfallen aus der Gleitführung 23. Es ist zweckmäßig, für diese Rast 39 das Loch zu verwenden, welches bei handelsüblichen Messern 8 im Bereich des Hinterendes des Messers vorgesehen ist und bei bekannten Konstruktionen dazu dient, das Messer mittels einer das Loch durchsetzenden Schraube in seiner Aufnahme festzuklemmen. Statt eines solchen federnden Druckstückes 38 kann auch ein Magnet in der Gleitführung 23 vorgesehen sein, zweckmäßig an der Hinterkante 28 des Messers 8, welcher Magnet das Messer 8 gegen Herausfallen aus der Gleitführung 23 sichert. So können auch Messer 8 verwendet werden, die kein Loch aufweisen.

Wie Fig. 2 zeigt, ist das federnde Druckstück 38 im unteren Gleitführungsbauteil 35 eingebaut und liegt im Bereiche des Hinterendes des Messers 8 nahe der zweiten Abstützstelle 25, gegenüber dieser geringfügig in Richtung zur Schneidkante 9 versetzt. Eine andere, ebenfalls sehr günstige Ausführungsform besteht darin, das federnde Druckstück (oder den Magnet) im oberen Gleitführungsbauteil 34 anzuordnen, sodass also dieses Druckstück an der Seite der Deckfläche 29 des Messers 8 liegt. Dies ermöglicht es, das Druckstück 38 bzw. den Magneten in einen Bereich zu legen, welcher der zweiten Abstützstelle 25 gegenüberliegt. Das Druckstück bzw. der Magnet darf die Schwenkmöglichkeit des Messers 8 nicht behindern. Daher soll die Kugel des Druckstückes 38 mit entsprechendem Spiel in der Rast 39 sitzen bzw. die Kraft und Anordnung des Magneten entsprechend gewählt sein.

## Patentansprüche

1. Halterung für Messer von Granuliervorrichtungen, insbesondere zum Heißabschlagen aus Düsen (6) ausgepresster Stränge aus thermoplastischem Kunststoff, wobei das Messer (8) begrenzt beweglich in einer Aufnahme (11) der Halterung (12) sitzt, die als Gleitführung (23) für das Messer (8) ausgebildet ist, die das Messer (8) in seiner Längsrichtung führt, **dadurch gekennzeichnet, dass** das Messer (8) in der Gleitführung (23) mit Spiel sitzt, sodass sich das Messer (8) begrenzt um seine Längsachse (26) in der Gleitführung (23) verschwenken kann, und dass das Messer (8) an drei Abstützstellen (24, 25, 27) an seiner Halterung (12) abgestützt ist, von denen die erste (24) an der Deckfläche (29) des Messers (8) liegt, die zweite (25) an der Bodenfläche (30) des Messers (8), wobei diese beiden Abstützstellen (24, 25), gesehen in Richtung der Längsachse des Messers (8), voneinander in Abstand in dieser Längsachse (26) angeordnet sind, und die erste Abstützstelle (24) näher zur Schneide (9) des Messers (8) liegt als die zweite Abstützstelle (25), wogegen die dritte Abstützstelle (27) an dem der Schneide (9) abgewendeten Hinterende des Messers (8) liegt.

2. Halterung nach Anspruch 1, **dadurch gekennzeichnet, dass** die dritte Abstützstelle (27) von einem an der Hinterkante (28) des Messers (8) anliegenden Vorsprung (33) der Halterung (12) gebildet ist.

3. Halterung nach Anspruch 1 oder 2, **dadurch gekennzeichnet, dass** zumindest die erste und zweite Abstützstelle (24, 25) punktförmig oder ballig ausgebildet sind, vorzugsweise in Form der Spitzen von Bolzen oder Schrauben (31, 32).

4. Halterung nach einem der Ansprüche 1 bis 3, **dadurch gekennzeichnet, dass** die erste und zweite Abstützstelle (24, 25) von in Gewindebohrungen der Halterung (12) sitzenden Stellschrauben (31, 32) gebildet sind.

5. Halterung nach einem der Ansprüche 1 bis 4, **dadurch gekennzeichnet, dass** die Gleitführung (23) an einem Schwenkzapfen (13) befestigt ist, der im Sinne einer Anpressung der Schneidkante (9) des Messers (8) belastet ist, vorzugsweise durch eine Feder (17).

6. Halterung nach einem der Ansprüche 1 bis 5, **dadurch gekennzeichnet, dass** das Messer (8) in der Gleitführung (23) durch ein federndes Druckstück (38) oder durch einen Magnet gegen Herausfallen aus der Gleitführung (23) gehalten ist.

7. Halterung nach Anspruch 6, **dadurch gekennzeichnet, dass** das federnde Druckstück (38) in eine Rast (39) des Messers (8) eingreift.

8. Halterung nach Anspruch 6 oder 7, **dadurch gekennzeichnet, dass** das federnde Druckstück (38) oder der Magnet an der Seite der Deckfläche (29) des Messers (8) an der Gleitführung (23) angeordnet ist, vorzugsweise in einem Bereich, welcher der zweiten Abstützstelle (25) gegenüberliegt.

9. Halterung nach Anspruch 6, **dadurch gekennzeichnet, dass** der Magnet an der Hinterkante (28) des Messers (8) anliegt.

10. Halterung nach einem der Ansprüche 1 bis 9, **dadurch gekennzeichnet, dass** die Gleitführung (23) geglättete, vorzugsweise polierte und gehärtete Gleitflächen hat.

11. Halterung nach einem der Ansprüche 1 bis 10, **dadurch gekennzeichnet, dass** die Gleitführung (23) aus zwei miteinander verbundenen Bauteilen (34, 35) besteht, von denen der eine (34) die erste Abstützstelle (24) aufweist und das Messer (8) an dessen Deckfläche (29) und an den beiden Seitenrändern führt, wogegen der andere Bauteil (35) die zweite Abstützstelle (25) aufweist und das Messer (8) an dessen Bodenfläche (30) führt.

## Claims

1. Knife holder for granulating apparatus, particularly for hot striking off strands of thermoplastic material extruded from nozzles (6), said knife (8) being fitted in a restrictedly moveable manner in a fixture (11) of the holder (12) formed as a sliding guidance (23) for the knife (8), which guides said knife (8) in its longitudinal direction, **characterised in that** said knife is fitted in said sliding guidance (23) with some tolerance so that said knife (8) is able to pivot in said sliding guidance (23) by a limited amount about its longitudinal axis (26), and that said knife (8) is supported by its holder (12) at three supporting places (24, 25, 27), the first one (24) being situated at the cover surface (29) of said knife (8), the second one (25) at the bottom surface (30) of said knife (8), the two supporting places (24, 25) being spaced from one another along said longitudinal axis (26) when seen in the direction of said longitudinal axis of said knife (8), the first supporting place (24) being closer to the cutting edge (9) of said knife (8) than the second supporting place (25), whereas the third supporting place (27) is located at the rear end of said knife (8) averted from said cutting edge (9).

2. Knife holder according to claim 1, **characterised in that** said third supporting place (27) is formed by a projection (33) of said holder (12) that engages the rear edge (28) of said knife (8).

3. Knife holder according to claim 1 or 2, **characterised in that** at least said first and second supporting places (24, 25) are in punctiform or crowned, preferably in the form of the tips of bolts or screws (31, 32).

4. Knife holder according to any of claims 1 to 3, **characterised in that** said first and second supporting places (24, 25) are formed by adjusting screws (31, 32) situated in threaded bores of said holder (12).

5. Knife holder according to any of claims 1 to 4, **characterised in that** said sliding guidance (23) is mounted on a swivel journal (13) which is biased in the sense of a contact pressure of said cutting edge (9) of said knife (8), preferably by a spring (17).

6. Knife holder according to any of claims 1 to 5, **characterised in that** said knife (8) is secured within said sliding guidance (23) against dropping out of said sliding guidance (23) by a resilient pressure member (38) or by a magnet.

7. Knife holder according to claim 6, **characterised in that** said resilient pressure member (38) engages a notch (39) of said knife (8).

8. Knife holder according to claim 6 or 7, **characterised in that** said resilient pressure member (38) or said magnet is arranged at said sliding guidance (23) at the side of said cover surface (29) of said knife (8), preferably within a region opposite said second supporting place (25).

9. Knife holder according to claim 6, **characterised in that** said magnet engages the rear edge (28) of said knife (8).

10. Knife holder according to any of claims 1 to 9, **characterised in that** said sliding guidance (23) comprises smoothed, preferably polished and hardened sliding surfaces.

11. Knife holder according to any of claims 1 to 10, **characterised in that** said sliding guidance (23) comprises two interconnected components (34, 35), one of them (34) including said first supporting place (24) and guiding said knife (8) on its cover surface (29) and on its two side edges, whereas the other component (35) includes said second supporting place (25) and guides said knife (8) on its bottom surface (30).

## Revendications

1. Support de lames pour appareils de granulation, particulièrement pour abattre à chaud des boudins de matière thermoplastique extrudés des filières (6), la lame (8) étant calée d'une manière mobile de façon limitée dans un logement (11) dudit support (12), qui est formé comme guidage à glissement (23) pour la lame (8), qui guide ladite lame (8) dans sa direction longitudinale, **caractérisé en ce que** la lame (8) est logée dans ledit guidage à glissement (23) avec de jeu, de manière que ladite lame (8) peut se tourner de façon limitée dans ledit guidage à glissement (23) autour de son axe longitudinal (26), et que ladite lame (8) est appuyée à son support (12) aux trois places d'appui (24, 25, 27), la première (24) étant située à la surface de recouvrement (29) de la lame (8), la seconde (25) à la surface inférieure (30) de la lame (8), lesdites deux places d'appui (24, 25) étant espacées l'une de l'autre le long dudit axe longitudinal (26), vu en direction de l'axe longitudinal de la lame (8), et que la première place d'appui (24) est située plus proche au tranchant (9) de la lame (8) que la deuxième place d'appui (25), tandis que la troisième place d'appui (27) est située au talon de la lame (8) détourné dudit tranchant (9).

2. Support selon la revendication 1, **caractérisé en ce que** la troisième place d'appui (27) est formée par une saillie (33) du support (12) portée bien au côté arrière (28) de la lame (8).

3. Support selon la revendication 1 ou 2, **caractérisé en ce qu'**au moins la première et la deuxième places d'appui (24, 25) sont formées d'une manière ponctuelle ou bombée, de préférence en forme des pointes des boulons ou des vis (31, 32).

4. Support selon une quelconque des revendications 1 à 3, **caractérisé en ce que** la première et la deuxième places d'appui (24, 25) sont formée des vis d'ajustage (31, 32) logées dans des alésages taraudés du support (12).

5. Support selon une quelconque des revendications 1 à 4, **caractérisé en ce que** ladite guidage à glissement (23) est montée à un tourillon de pivotement (13), qui est chargé en sens d'une pression de contact du tranchant (9) de la lame (8), de préférence par un ressort (17).

6. Support selon une quelconque des revendications 1 à 5, **caractérisé en ce que** ladite lame (8) est arrêtée dans ledit guidage à glissement (23) contre tomber hors dudit guidage à glissement (23) par un membre de pression (38) élastique ou par un aimant.

7. Support selon la revendication 6, **caractérisé en ce que** ledit membre de pression (38) élastique s'engrène dans un crantage (39) de la lame (8).

8. Support selon la revendication 6 ou 7, **caractérisé en ce que** ledit membre de pression (38) élastique ou ledit aimant est disposé au guidage à glissement (23) au côté de la surface de recouvrement (29) de la lame (8), préférablement dans une zone, qui est opposée à la deuxième place d'appui (25).

9. Support selon la revendication 6, **caractérisé en ce que** ledit aimant est porté bien au bord arrière (28) de la lame (8).

10. Support selon une quelconque des revendications 1 à 9, **caractérisé en ce que** ledit guidage à glissement (23) a des surfaces de glissement lissées, de préférence polies et trempées.

11. Support selon une quelconque des revendications 1 à 10, **caractérisé en ce que** ledit guidage à glissement (23) comprend deux éléments (34, 35) reliés l'un à l'autre, l'un (34) comprenant la première place d'appui (24) et guidant la lame (8) sur sa surface de recouvrement (29) et les deux bords latéraux, tandis que l'autre élément (35) comprend la deuxième place d'appui (25) et guide la lame (8) à sa surface inférieure (30).
